Europäisches Patentamt

European Patent Office

Office européen des brevets

(11) Veröffentlichungsnummer: **0 035 251**
A1

# EUROPÄISCHE PATENTANMELDUNG

(21) Anmeldenummer. 81101435.6

(51) Int. Cl.³: **B 32 B 21/00**, B 32 B 7/00

(22) Anmeldetag: 27.02.81

(30) Priorität: 29.02.80 DE 3007697

(43) Veröffentlichungstag der Anmeldung· 09.09.81
Patentblatt 81/36

(84) Benannte Vertragsstaaten. DE FR GB IT SE

(71) Anmelder: Konrad Hornschuch Aktiengesellschaft,
D-7119 Weissbach (DE)

(72) Erfinder: Vollbrecht, Michael, Morsbacherstrasse 38,
D-7118 Künzelsau (DE)
Erfinder: Falk, Karl-Heinz, Dr. Dipl.-Chem.,
Weinsteige 37, D-7119 Niedernhall (DE)
Erfinder: Koch, Gudrun, Heuholzerstrasse 41,
D-7114 Untersteinbach (DE)

(74) Vertreter: Bunke, Max, Dipl.-Ing. Dipl.-Ing. Max Bunke
Dipl.-Chem. Dr. H. Bunke et al, Dipl.-Phys. H. Degwert
Patentanwälte Postfach 1186 Lessingstrasse 9,
D-7000 Stuttgart 1 (DE)

(54) Formteile aus Kunststoff, Verfahren zu deren Herstellung und deren Verwendung.

(57) Die Erfindung betrifft Formteile aus thermoplastischen Kunststoffen oder aus Holzfaserwerkstoffen, deren Oberfläche ganz oder teilweise mit einer Schutz- oder Dekorationsschicht aus folien- oder bahnförmigen thermoplastischen Kunststoffen, textilen Materialien oder mit thermoplastischen Kunststoffen beschichteten textilen Materialien überzogen ist, bei denen auf der Unterseite der Schutz- oder Dekorationsschicht eine haftvermittelnde Schicht aus einem mit Licht geeigneter Wellenlänge thermoaktivierbaren und gleichzeitig vernetzbaren Klebstoff aufgetragen ist, ausserdem ein Verfahren zur Herstellung, bei dem entweder von vorgeformten Formteilen ausgegangen wird, wobei das bisher übliche Einsprühen der Formteile mit Klebstoff, das Ablüften des Kleberauftrags und die Rückgewinnung von leicht flüchtigen organischen Lösungsmitteln entfallen, oder bei dem die Schutz- oder Dekorationsschichten während des Formens der Trägerplatten im selben Arbeitsgang mit den Formteilen verklebt werden. Die Formteile werden für die Innenausstattung von Kraftfahrzeugen und als Karosserieteile verwendet.

Bezeichnung der Erfindung «Formteile aus Kunststoff. Verfahren zu deren Herstellung und deren Verwendung».

PATENTANWÄLTE
## Dipl.-Ing. MAX BUNKE
## Dipl.-Chem. Dr. HOLGER BUNKE
## Dipl.-Phys. HARTMUT DEGWERT

**0035251**

7000 STUTTGART 1

Lessingstraße 9
Postfach 1186
Telefon (0711) 29 33 74
Telex 07-22 279
Postscheckkonto Stuttgart 40533-709
Landesgirokasse Stuttgart 2 295 167
Deutsche Bank Stuttgart 89/06 067

PA Degwert: Sitz München

Bitte nennen Sie
unser Zeichen          Tag

P 2554 EP       26. Febr. 1981
12/

Konrad Hornschuch Aktiengesellschaft

7119 Weissbach / Bundesrepublik Deutschland

Formteile aus Kunststoff, Verfahren zu deren
Herstellung und deren Verwendung

Die Erfindung betrifft Formteile aus thermoplastischen Kunststoffen oder aus Holzfaserwerkstoffen, deren Oberfläche ganz
oder teilweise mit einer Schutz- oder Dekorationsschicht aus
folien- oder bahnförmigen thermoplastischen Kunststoffen, textilen Materialien oder mit thermoplastischen Kunststoffen beschichteten textilen Materialien überzogen ist.

Solche Formteile sind bekannt. Sie werden beispielsweise in der Automobilindustrie mit Überzügen aus thermoplastischen Flächengebilden als Dekorationsschichten hergestellt und verarbeitet und insbesondere für die Innenausstattung von Land-, Luft- und Wasserfahrzeugen verwendet. Sie werden vorzugsweise eingesetzt für die Innenausstattung von Personenkraftwagen, beispielsweise als Türseitenteile, Hutablagen, Fertighimmel und Armaturenverkleidungen sowie für die Ausstattung von Kofferräumen und dergleichen.

Weiterhin sind Formteile beispielsweise für die Bauindustrie bekannt, die ebenfalls einen Überzug aus thermoplastischen Flächengebilden aufweisen, allerdings nicht als Dekorationsschicht, sondern als Schutzschicht, beispielsweise zum Schutz gegen mechanische, chemische und biologische Zerstörung, oder Beeinträchtigung der Oberfläche von Formteilen mit Zellstruktur oder mit offenen Poren.

Diese bekannten Formteile wurden bisher so hergestellt, daß man plattenförmige Trägermaterialien aus thermoplastischen Kunststoffen oder Holzfaserwerkstoffen durch Pressen oder Tiefziehen in einem ersten Arbeitsgang fertig verformt hat. In einem zweiten Arbeitsgang wurde das fertig ausgeformte Formteil dann mit einem geeigneten flüssigen Klebstoff eingesprüht, beispielsweise mit einer verdünnten Lösung eines Zweikomponentenpolyurethan-Klebstoffs in einem hierfür üblicherweise verwendeten Lösungsmittel wie Essigsäureäthylester. Der Naßauftrag erfolgte mit Spritzpistolen, die üblicherweise mit Drehstrahldüsen und Flachstrahlköpfen ausgerüstet sind, bei einem Spritzdruck von etwa 4 bis 6 atü, wobei die Menge des Naßauftrages - je nach Saugfähigkeit des Untergrundes - zwischen 100 und 200 g/m$^2$ betrug.

Nach dem Aufsprühen oder Aufspritzen des Klebers mußte das Formteil in einem dritten Arbeitsgang "abgelüftet" werden, d.h. getrocknet werden unter gleichzeitigem Abziehen des Lösungsmittels. Das Lösungsmittel muß aus der Klebstoffschicht so vollständig wie möglich entfernt werden, damit beim Kaschieren mit dem Formteil keine Blasen zwischen dem Formteil und der aufzuklebenden Schutz- oder Dekorationsschicht entstehen. Die maximale Arbeitsplatzkonzentration (MAK-Wert) des üblicherweise für den Polyurethanklebstoff verwendeten Lösungsmittels Essigsäureäthylester ( = Äthylacetat) beträgt 1400 mg/m$^3$ bzw. 400 cm$^3$/m$^3$, die LD$_{50}$ des Äthylacetats beträgt bei oraler Applikation bei der Ratte 5620 mg/kg. Aus Gründen des Arbeitsschutzes muß die Ablüftung des Naßauftrags deshalb in einem Umlufttrockenkanal durchgeführt werden, wobei darauf zu achten ist, daß die Objekttemperatur 40$^o$C nicht überschreiten darf, wenn die Klebfähigkeit des Polyurethanklebstoffes erhalten bleiben soll. Die so mit Klebstoff beschichteten Formteile mußten nach den bisher angewandten Verfahren innerhalb von etwa 3 Stunden mit der Schutz- oder Dekorationsschicht kaschiert werden oder nochmals mit Klebstoff besprüht werden, da die freien Isocyanat-Gruppen des Polyurethanklebstoffs mit der Luftfeuchtigkeit abreagieren und die Klebfähigkeit des Klebstoffes nach mehr als 3 Stunden, nach Ablauf der "offenen Zeit", rapide absinkt.

In einem vierten Arbeitsgang wurde dann die Schutz- oder Dekorationsschicht, meist in Form einer thermoplastischen Kunststoffolie, mit Hilfe bekannter Vakuum- oder Preßverfahren auf das vorgeformte und mit Klebstoff beschichtete Formteil kaschiert. Hierbei mußten innerhalb der Klebefuge Temperaturen von etwa 55 bis 70$^o$C eingehalten werden, wenn die Verklebung fest und dauerhaft sein sollte.

Danach mußten die fertig überzogenen Formteile in einem fünften Arbeitsgang noch etwa 24 Stunden lagern, bis der Klebstoff ausreagiert hatte und die Verklebung ihre Endfestigkeit erreicht hatte.

Dieses bekannte Verfahren hatte den Nachteil, daß beim Einspritzen der Formteile Kleberver_luste von etwa 10 bis 20% auftraten, daß die verdunstenden Lösungsmittel beim Spritzen abgesaugt werden mußten, da sie gesundheitsgefährdend sind, daß das Lagern, Verdünnen, Spritzen und Ablüften des Klebstoffs in explosionsgeschützten Räumen erfolgen mußte. Außerdem traten bei stark porösen Formteilträgern durch in der Klebstoffschicht eingeschlossene Restlösungsmittel Blasen an den kaschierten Fertigteilen auf, und es kam, insbesondere bei porösen Formträgern, durch ungleichmäßigen Spritzauftrag zu örtlich ungenügenden Verklebungen. Ein weiterer Nachteil bestand darin, daß die mit Kleber beschichteten, vorbehandelten Teile innerhalb der relativ kurzen "offenen Zeit", die zudem je nach Temperatur und Luftfeuchtigkeit schwankt, verarbeitet werden mußten. Schließlich bedingte das bekannte Verfahren einen erheblichen verfahrenstechnischen und apparativen Aufwand, weil die fertig ausgeformten großen und unhandlichen Formteile als Ganze zum Ablüften des Kleberauftrages durch Umlufttrockenkanäle oder ähnliche Einrichtungen zum Abziehen des Lösungsmittels hindurchgeführt werden mußten.

Daneben ist es auch schon bekannt, mit thermoplastischen Kunststoffen beschichtete Formteile in einem einzigen Arbeitsgang durch Warmpressen mehrerer ebener Platten aus thermoplastisch verformbarem Material unter Einfügung von Schmelzkleberplatten herzustellen. Bei diesem zweiten bekannten Verfahren werden die Formteile nicht zuerst fertig ausgeformt und dann mit einer Schutz- oder Dekorationsschicht überzogen, sondern Verformung und Beschichtung erfolgen gleichzeitig. Da zur Warmverformung des Grundkörpers der Formteile höhere Temperaturen erforderlich sind und weit mehr Preßformarbeit geleistet werden muß als zur Warmverformung der Schutz- oder Dekorationsschicht, da andererseits aber die Schutz- oder Dekorationsschichten - meist thermoplastische Kunststofffolien - bei hohen Temperaturen und hoher mechanischer Beanspruchung irreversible Gefügeänderungen erleiden, konnte sich dieses Verfahren, insbesondere in der Kraftfahrzeugzulieferindustrie, nicht durchsetzen.

Der Erfindung liegt die Aufgabe zugrunde, unter Vermeidung aller dieser Nachteile Formteile der eingangs genannten Gattung zu schaffen, bei denen die Verklebung von Schutz- oder Dekorationsschicht und Formteil blasenfrei und unabhängig von einer "offenen Zeit" erfolgen kann, gleichzeitig aber so beschaffen ist, daß sich die Schutz- oder Dekorationsschicht auch bei mehrwöchigem Erhitzen des Formkörpers auf Temperaturen von bis zu 90°C nicht wieder ablöst. Der Erfindung liegt weiter die Aufgabe zugrunde, ein Verfahren zur Herstellung der Formteile der eingangs genannten Gattung zu schaffen, das die Nachteile der vorstehend beschriebenen bekannten Verfahren nicht aufweist, das weniger gesundheitsgefährdend ist, den gestiegenen Anforderungen des Arbeitsschutzes entspricht und mit einem geringeren apparativen Aufwand durchgeführt werden kann.

Diese Aufgabe wird bei einem Formteil der eingangs genannten Gattung dadurch gelöst, daß auf der Unterseite der Schutz- oder Dekorationsschicht eine haftvermittelnde Schicht aus einem mit Licht geeigneter Wellenlänge thermoaktivierbaren und gleichzeitig vernetzbaren Klebstoff aufgetragen ist.

Dadurch wird erreicht, daß beim Verkleben der Schutz- oder Dekorationsschicht mit dem Formkörper keine explosionsgefährlichen oder gesundheitsschädigenden Lösungsmittel frei werden, keine Kleberverluste auftreten und daß die Verarbeitung weder zeitlichen noch klimatischen Beschränkungen unterliegt, weil der thermoaktivierbare Klebstoff unbeschränkt lagerfähig ist, und zwar unabhängig von der Luftfeuchtigkeit, und jederzeit durch gezielte Zuführung von Wärme in den für die Verklebung erforderlichen reaktiven Zustand versetzt werden kann, der bei Verwendung der bisher üblichen Polyurethan-Lösungen nur innerhalb der "offenen Zeit" vorliegt.

Die Formkörper bestehen vorzugsweise aus thermoplastisch verformbaren Kunststoffen wie Polyvinylchlorid, Polyäthylen, Polypropylen, Polycarbonat, Polyacrylat, Polymethacrylat, Polystyrol, Acrylnitril-Butadien-Styrol-Copolymeren (ABS), Polyurethan und dergleichen, wobei die Polymeren übliche und dem Fachmann geläufige Füllmaterialien wie beispielsweise Holzmehl und sonstige Zuschläge, etwa Melaminharze, enthalten können.

Die Schutz- oder Dekorationsschicht besteht erfindungsgemäß entweder aus einer thermoplastischen Kunststoffolie oder aus einem bahnförmigen textilen Material, das ein Gewebe, wegen der größeren Flexibilität und Dehnbarkeit aber vorzugsweise ein Gewirke oder Gestrick sein kann. Das bahnförmige textile Material kann gleichzeitig mit thermoplastischen Kunststoffen ein- oder beidseitig beschichtet sein und diese thermoplastische Kunststoff-Beschichtung oder die als Schutz- oder Dekorationsschicht verwendete thermoplastische Kunststoffolie kann ganz oder teilweise geschäumt sein. Diese folien- oder bahnförmigen thermoplastischen Kunststoffe und textilen Materialien können, einmal mit dem Formkörper verklebt, reine Dekorationsschichten, reine Schutzschichten, etwa gegen bakterielle Zersetzung der Formkörper, oder sowohl Schutz- als auch Dekorationsschichten sein.

Unter "thermoaktivierbarem Klebstoff" wird erfindungsgemäß jeder Klebstoff verstanden, der unter gewöhnlichen, mitteleuropäischen Lagerbedingungen nahezu unbegrenzt lagerfähig ist und dessen Klebeigenschaften unabhängig von der Luftfeuchtigkeit erhalten bleiben, der jedoch unter Einwirkung von Wärme in den für die Verklebung mit dem Formkörper erforderlichen reaktiven Zustand versetzt wird.

Bevorzugte Ausführungsformen der erfindungsgemäßen Formteile bestehen darin, daß die Schutz- oder Dekorationsschicht aus einer thermoplastischen Kunststoff-Schaumfolie oder aus mit geschäumtem thermoplastischem Kunststoff beschichteten Geweben, Gewirken oder Gestricken besteht. Diese Ausführungsform ist insbesondere zur Verwendung für die Innenausstattung von Kraftfahrzeugen geeignet, weil sie die Fahrzeuginsassen vor Verletzungen beim Aufprall und bei Unfällen aller Art schützt.

Eine vorteilhafte Ausführungsform der Erfindung besteht weiter darin, daß der thermoaktivierbare Klebstoff ein aromatisches oder aliphatisches Einkomponentenpolyurethan mit einem Gehalt an einem üblichen Vernetzer oder aber ein selbstvernetzendes Gemisch aus Einkomponenten- und Zweikomponenten-Polyurethanen ist. Schichten dieser thermoaktivierbaren Klebstoffe lassen sich besonders gut auf Kunststoffolien oder bahnförmige textile Materialien auftragen, wobei sich die beschichteten Folien oder Bahnen mit einem Mitläufer aus Polyäthylenfolie oder Siliconpapier besonders einfach aufrollen lassen, ohne daß die Klebstoffschicht durch den Mitläufer oder durch die Schutz- oder Dekorationsschicht selbst abgezogen wird.

Eine weitere bevorzugte Ausführungsform der erfindungsgemäßen Formteile besteht darin, daß der thermoaktivierbare Klebstoff zur gegebenenfalls zusätzlichen Vernetzung Melaminharz enthält, was infolge des größeren Vernetzungsgrades der Klebstoff-Fuge zu einer widerstandsfähigeren und haltbareren Verklebung führt.

Den ästhetischen Formensinn besonders ansprechende erfindungsgemäße Formteile weisen eine bedruckte, geprägte oder beflockte Oberseite der Schutz- oder Dekorationsschicht und damit auch des damit beklebten Formteils selbst auf.

Die der Erfindung zugrundeliegende Aufgabe wird weiter durch ein Verfahren zur Herstellung der erfindungsgemäßen Formteile gelöst, bei dem man eine Schutz- oder Dekorationsschicht verwendet, auf deren Unterseite eine Schicht aus mit Licht geeigneter Wellenlänge thermoaktivierbarem und gleichzeitig vernetzbarem Klebstoff aufgetragen ist, und bei dem diese Schutz- oder Dekorationsschicht unter gezielter Erwärmung der Klebstoffschicht entweder mit dem vorgeformten Formteil verklebt wird oder aber während des Formens der Trägerplatten im selben Arbeitsgang mit dem Formteil verklebt wird.

Durch das erfindungsgemäße Verfahren werden die fünf Arbeitsgänge, die bei dem bisher angewandten Verfahren, bei dem von vorgeformten Formteilen ausgegangen wird, erforderlich waren, nämlich Verformung der Trägerplatten, Einsprühen des Formteils mit Klebstoff, Ablüften des Kleberauftrags, Kaschieren des Überzugs, Endlagerung der Formteile, auf einen einzigen Arbeitsgang reduziert.

Die Klebstoffschicht, die bei dem erfindungsgemäßen Verfahren bereits auf der verwendeten Schutz- oder Dekorationsschicht fertig aufgebracht ist oder aber vor der Herstellung der erfindungsgemäßen Formteile auf die Schutz- oder Dekorationsschicht, also die Kunststoffolie oder das bahnförmige, gegebenenfalls mit thermoplastischem Kunststoff beschichtete textile Material aufgetragen wird, braucht nicht mehr aufgespritzt zu werden, sondern kann nach an sich bekannten Methoden mit Hilfe von Kalandern, Rakeln oder im Tauchverfahren aufgetragen oder aufgestrichen werden, wobei keine Klebstoffverluste auftreten und wobei die Entfernung des Lösungsmittels des Klebstoffes auf wesentlich einfachere Art und Weise und unter geringerem apparativem Aufwand als bei dem eingangs beschriebenen bekannten Verfahren erfolgen kann, weil nicht mehr die mit Klebstoff eingesprühten großen und unhandlichen Formteile selbst, sondern die stets in gleicher Breite und Dicke bahnförmig produzierte Folie durch eine entsprechende Trockeneinrichtung, beispielsweise einen Umlufttrockenkanal, kontinuierlich hindurchgeführt werden kann.

Unter "gezielter Erwärmung der Klebstoffschicht" wird erfindungsgemäß verstanden, daß nur die Klebstoffschicht auf die zur Erzielung der Reaktivität des Klebstoffes erforderliche Temperatur erhitzt wird, während die Kunststoffolie oder das bahnförmige textile Material, auf deren Unterseite sich die Klebstoffschicht befindet, und das aus den Trägerplatten geformte Formteil nicht auf die für die Reaktivität des Klebstoffs erforderliche Temperatur erwärmt werden, sondern eine deutlich niedrigere Temperatur beibehalten.

Die gezielte Erwärmung der Klebstoffschicht wird mit Hilfe von Licht geeigneter Wellenlänge, insbesondere mittels Infrarotstrahlung, durchgeführt. Die Klebstoffschicht wird während des Verklebens der Schutz- oder Dekorationsschicht mit dem Formkörper auf vorzugsweise 90 bis 170°C erwärmt.

Vorzugsweise erfolgt die Verklebung der Formteile mit der Schutz- oder Dekorationsschicht nach einem der an sich bekannten Vakuumtiefziehverfahren oder einem ebenfalls an sich bekannten Preßverfahren mit Hilfe einer Stempelmaschine.

Weiter besteht ein besonders bevorzugtes Ausführungsbeispiel des erfindungsgemäßen Verfahrens darin, daß die Schutz- oder Dekorationsschicht während des Verklebens mit dem Formteil gleichzeitig auf ihrer Oberseite bedruckt, geprägt oder beflockt wird.

Schließlich besteht die Erfindung in der Verwendung der in den Ansprüchen gekennzeichneten Formteile für die Innenausstattung von Land-, Luft- und Wasserfahrzeugen, insbesondere von Automobilen, beispielsweise als Tür-

seitenteile, Hutablagen, Fertighimmel und Armaturenver-kleidungen. Die erfindungsgemäßen Formteile können ebenso als Karosserieteile verwendet werden.

Beispiel 1

Eine geschäumte PVC-Folie, bestehend aus 350 g/m$^2$ Deck-schicht und 525 g/m$^2$ Schaumschicht, wird rückseitig mit 70 g/m$^2$ eines 1:1-Gemisches aus

(a) Mischung I:

$\quad$ 450 T$^+$ Polyesterurethan (reaktionsfähiges Prepolymer mit endständigen OH-Gruppen)

$\quad$ 600 T Äthylacetat

$\quad$ 450 T Methyläthylketon

$\quad$ 250 T iso-Butylacetat

$\quad$ 22 T Katalysator (Gemisch aus organi-schem Stickstoffderivat und orga-nischer Metallverbindung)

$\quad$ 35 T eines aromatischen Polyisocyanats

und (b)

Mischung II:

$\quad$ 90 bis 99 T 45%ige Einkomponentenpolyesterurethan-Lösung in Äthylacetat, Methyläthylketon, iso-Butylacetat, Dimethylformamid, Methyl-iso-butyl-keton oder Gemischen dieser Lösungs-mittel

$\quad$ 1 bis 10 T Melaminharz

$\quad$ 0 bis 15 T Methyläthylketon

bestrichen, bei 120 bis 130°C getrocknet, abgekühlt und mit Polyäthylenfolie oder Siliconpapier als Mitläufer aufgerollt.

Die so vorbereitete Folie wird nach dem Abziehen der Mitläuferfolie in den Rahmen einer Tiefziehmaschine eingelegt und mit Hilfe von IR-Strahlern von unten so erwärmt, daß die thermoaktivierbare Klebstoffschicht auf der Unterseite

+) = Gewichtsteile der Folie auf etwa 140°C, die Oberseite der Folie aber nur auf etwa 100°C erwärmt wird, und durch Anlegen eines Vakuums in der Tiefziehmaschine mit einem vorgeformten Polycarbonat-Formteil verklebt. Nach dem Abkühlen werden die Ränder besäumt, wonach das Formteil als Bestandteil der Innenausstattung für den Einbau im Automobil zur Verfügung steht.

Beispiel 2

Eine geschäumte und beflockte PVC-Folie, bestehend aus 320 g/m² Deckschicht und 450 g/m² Schaumschicht, wird rückseitig mit 70 g/m² eines 1:1-Gemisches aus

(a) Mischung I:

| | |
|---|---|
| 450 T | Polyesterurethan (reaktionsfähiges Prepolymer mit endständigen OH-Gruppen) |
| 600 T | Äthylacetat |
| 450 T | Methyläthylketon |
| 250 T | iso-Butylacetat |
| 22 T | Katalysator (Gemisch aus organischem Stickstoffderivat und organischer Metallverbindung) |
| 35 T | aromatisches Polyisocyanat |

und (b)

Mischung II:

| | |
|---|---|
| 90 bis 99 T | 45%ige Einkomponentenpolyesterurethan-Lösung in Äthylacetat, Methyläthylketon, iso-Butylacetat, Dimethylformamid, Methyl-iso-butylketon oder Gemischen dieser Lösungsmittel |
| 1 bis 10 T | Melaminharz |
| 0 bis 15 T | Methyläthylketon |

bestrichen, bei 120 bis 130°C getrocknet, abgekühlt und mit Polyäthylenfolie als Mitläufer aufgerollt.

Die so vorbereitete Folie wird nach dem Abziehen der Mitläuferfolie in den Rahmen einer Stempelmaschine eingespannt, mit Hilfe von Infrarot-Strahlern wird die Klebstoffschicht auf der Unterseite der Folie auf ca. 150°C erwärmt, und durch Senken des Stempels wird die Folie mit einem vorgeformten Formteil aus holzmehlgefülltem Polypropylen verpreßt. Nach dem Abkühlen werden die Ränder besäumt, und das Formteil kann als Bestandteil der Innenausstattung eines Kraftfahrzeuges eingebaut werden.

Beispiel 3

Ein in beiden Raumrichtungen elastisches Gewirke wird rückseitig mit einer thermoplastischen Schicht aus 200 $g/m^2$ PVC-Deckstrich und 350 $g/m^2$ PVC-Schaumstrich beschichtet. Auf diese PVC-Schicht werden anschließend 70 $g/m^2$ eines thermoaktivierbaren Klebstoffes gestrichen, der aus einem Gemisch aus

(a) Mischung I:

|  |  |
|---|---|
| 450 T | Polyesterurethan (reaktionsfähiges Prepolymer mit endständigen OH-Gruppen) |
| 600 T | Äthylacetat |
| 450 T | Methyläthylketon |
| 250 T | iso-Butylacetat |
| 22 T | Katalysator (Gemisch aus organischem Stickstoffderivat und organischer Metallverbindung) |
| 33 T | aromatisches Polyisocyanat |

und (b)

Mischung II:

|  |  |
|---|---|
| 90 bis 99 T | 45%ige Einkomponentenpolyesterurethan-Lösung in Äthylacetat, Methyläthylketon, iso-Butylacetat, Dimethylformamid, Methyl-iso-butylketon oder Gemischen dieser Lösungsmittel |
| 1 bis 10 T | Melaminharz |
| O bis 15 T | Methyläthylketon |

besteht, wobei das Mischungsverhältnis Mischung I : Mischung II 1:1 beträgt, bei 120 bis 130°C getrocknet, abgekühlt und mit Siliconpapier als Mitläufer aufgerollt.

Das so vorbehandelte Gewirke wird nach dem Abziehen des Mitläufers in den Rahmen einer Vakuumtiefziehmaschine eingespannt, die Klebstoffschicht auf der Unterseite des beschichteten Gewirkes wird mit Hilfe von Infrarot-Strahlern auf etwa 140 bis 160°C erwärmt, und das Gewirk wird durch Anlegen des Vakuums mit einer Platte aus Acrylnitril-Butadien-Styrol-Copolymer (ABS) verklebt, welche gleichzeitig zu dem gewünschten Formkörper verformt wird. Nach dem Abkühlen werden die Ränder besäumt, und das Formteil mit textiler Oberfläche steht für den Einbau im Automobil als Teil der Innenausstattung zur Verfügung.

PATENTANWÄLTE

**Dipl.-Ing. MAX BUNKE**
**Dipl.-Chem. Dr. HOLGER BUNKE**
**Dipl.-Phys. HARTMUT DEGWERT**

7000 STUTTGART 1
Lessingstraße 9
Postfach 11 86
Telefon (0711) 29 33 74
Telex 07-22 279
Postscheckkonto Stuttgart 405 33-709
Landesgirokasse Stuttgart 2 295 167
Deutsche Bank Stuttgart 89/06 067

PA Degwert: Sitz München

0035251

Bitte nennen Sie
unser Zeichen          Tag

P 2554 EP 12/31     26. Febr. 1981

## Patentansprüche

1. Formteile aus thermoplastischen Kunststoffen oder aus Holzfaserwerkstoffen, deren Oberfläche ganz oder teilweise mit einer Schutz- oder Dekorationsschicht aus folien- oder bahnförmigen thermoplastischen Kunststoffen, textilen Materialien oder mit thermoplastischen Kunststoffen beschichteten textilen Materialien überzogen ist, dadurch gekennzeichnet, daß auf der Unterseite der Schutz- oder Dekorationsschicht eine haftvermittelnde Schicht aus einem mit Licht geeigneter Wellenlänge thermoaktivierbaren und gleichzeitig vernetzbaren Klebstoff aufgetragen ist.

2. Formteile nach Anspruch 1, dadurch gekennzeichnet, daß die Schutz- oder Dekorationsschicht aus einer thermoplastischen Kunststoff-Schaumfolie oder aus mit geschäumtem thermoplastischem Kunststoff beschichteten Geweben, Gewirken oder Gestricken besteht.

3. Formteile nach Anspruch 1 oder 2, dadurch gekennzeichnet, daß der thermoaktivierbare Klebstoff ein aromatisches oder aliphatisches Einkomponentenpolyurethan ist, das einen Gehalt an einem üblichen Vernetzer aufweist.

4. Formteile nach Anspruch 1 oder 2, dadurch gekennzeichnet, daß der thermoaktivierbare Klebstoff ein selbstvernetzendes Gemisch aus Einkomponenten- und Zweikomponenten-Polyurethanen ist.

5. Formteile nach einem der Ansprüche 3 oder 4, dadurch gekennzeichnet, daß der thermoaktivierbare Klebstoff zur gegebenenfalls zusätzlichen Vernetzung Melaminharz enthält.

6. Formteile nach einem der Ansprüche 1 bis 5, dadurch gekennzeichnet, daß die Schutz- oder Dekorationsschicht bedruckt, geprägt oder beflockt ist.

7. Verfahren zur Herstellung der Formteile gemäß den Ansprüchen 1 bis 6 aus

(a) entweder vorgeformten, aber unbeschichteten Formteilen oder Trägerplatten aus thermoplastischen Kunststoffen oder Holzfaserwerkstoffen,

(b) als Schutz- oder Dekorationsschicht dienenden thermoplastischen Kunststoffolien, bahnförmigen textilen Materialien oder mit thermoplastischen Kunststoffen beschichteten textilen Materialien und

(c) einer die Haftung zwischen Trägerplatten und Schutz- oder Dekorationsschicht vermittelnden Klebstoffschicht,

dadurch gekennzeichnet, daß man eine Schutz- oder Dekorationsschicht verwendet, auf deren Unterseite eine Schicht aus mit Licht geeigneter Wellenlänge thermoaktivierbarem und gleichzeitig vernetzbarem Klebstoff aufgetragen ist, und daß diese Schutz- oder Dekorationsschicht unter gezielter Erwärmung der Klebstoffschicht entweder mit dem vorgeformten Formteil verklebt wird oder aber während des Formens der Trägerplatten im selben Arbeitsgang mit dem Formteil verklebt wird.

8. Verfahren nach Anspruch 7, dadurch gekennzeichnet, daß als thermoaktivierbarer Klebstoff ein aromatisches oder aliphatisches Einkomponentenpolyurethan mit einem Gehalt an einem üblichen Vernetzer verwendet wird.

9. Verfahren nach Anspruch 7, dadurch gekennzeichnet, daß als thermoaktivierbarer Klebstoff ein selbstvernetzendes Gemisch aus Einkomponenten- und Zweikomponenten-Polyurethanen verwendet wird.

10. Verfahren nach Anspruch 8 oder 9, dadurch gekennzeichnet, daß als thermoaktivierbarer Klebstoff ein Polyurethan oder Polyurethangemisch verwendet wird, das zur gegebenenfalls zusätzlichen Vernetzung Melaminharz enthält.

11. Verfahren nach einem der Ansprüche 7 bis 10, dadurch gekennzeichnet, daß die gezielte Erwärmung der Klebstoffschicht mit Hilfe von Infrarotstrahlung erfolgt.

12. Verfahren nach einem der Ansprüche 7 bis 11, dadurch gekennzeichnet, daß die Klebstoffschicht während des Verklebens auf 90 bis 170$^\circ$C erwärmt wird.

13. Verfahren nach einem der Ansprüche 7 bis 12, dadurch gekennzeichnet, daß das Verkleben der Formteile mit der Schutz- oder Dekorationsschicht nach dem Vakuumtiefziehverfahren oder nach dem Preßverfahren (Stempelmaschine) erfolgt.

14. Verfahren nach einem der Ansprüche 7 bis 13, dadurch gekennzeichnet, daß die Schutz- oder Dekorationsschicht während des Verklebens mit dem Formteil gleichzeitig auf ihrer Oberfläche bedruckt, geprägt oder beflockt wird.

0035251

15. Verwendung der gemäß den Ansprüchen 7 bis 14 hergestellten Formteile für die Innenausstattung von Land-,
Luft- und Wasserfahrzeugen, insbesondere von Automobilen.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - B - 1 256 822</u> (BAYER) <br> * Spalte 1, Zeilen 27-39; Spalte 3, Zeilen 54-68; Spalte 4, Zeilen 1-5 * | 1,4,7, 9,11, 12 |
| | -- | |
| | <u>DE - A - 1 719 120</u> (BAYER) <br> * Seite 6, Zeilen 9-17; Seiten 7,14 * | 1,4,7, 9,11, 12 |
| | -- | |
| | <u>US - A - 4 169 005</u> (O. FOGLE UND J. COOLEY) <br> * Spalte 1, Zeilen 35-58; Spalte 2, Zeilen 18-68; Spalte 3, Zeilen 1-15; Figur * | 1,4,7, 9,11, 12 |
| | -- | |
| | <u>DE - A - 2 309 145</u> (REED) <br> * Seite 1, Zeilen 1-9; Seite 3, Zeilen 10-27; Seite 4, Zeilen 5-10; Seite 6, Zeilen 18-33; Seite 7, Zeilen 1-5; Seite 8, Zeilen 9-21; Seite 10, Zeilen 2-31; Seite 11, Zeilen 1-16 * | 1,2,4, 7,11 |
| | -- | |
| A | <u>DE - A - 1 965 521</u> (CUSIDE) | |
| A | <u>DE - A - 2 506 097</u> (EXXON) | |
| | ---- | |

**KLASSIFIKATION DER ANMELDUNG (Int. Cl.)**

B 32 B 21/00
B 32 B 7/00

**RECHERCHIERTE SACHGEBIETE (Int. Cl.)**

B 32 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-05-1981 | VAN THIELEN |